# EUROPÄISCHE PATENTSCHRIFT

(11) **EP 4 389 401 B1**
(45) Veröffentlichungstag und Bekanntmachung des Hinweises auf die Patenterteilung: **14.01.2026**
(21) Anmeldenummer: 23211718.4
(22) Anmeldetag: 23.11.2023
(51) Int. Cl.: B29C 65/08

(54) **ROTATIONSSONOTRODE**
ROTARY SONOTRODE
SONOTRODE ROTATIVE

(30) Priorität: 23.12.2022 DE 102022134767
(43) Veröffentlichungstag der Anmeldung: 26.06.2024
(73) Patentinhaber: MS Ultraschall Technologie GmbH, 78549 Spaichingen (DE)
(72) Erfinder: Fischer, Thomas, 75334 Straubenhardt (DE)
(74) Vertreter: Qip Patent & Recht Dr. Kuehn & Partner mbB

(56) Entgegenhaltungen:
- US-A1- 2021 370 613

## Beschreibung

Die vorliegende Erfindung betrifft eine Rotationssonotrode mit einem um eine Rotationsachse drehbaren Sonotrodenkörper, der zumindest eine Arbeitsfläche aufweist, wobei sich an den Sonotrodenkörper zumindest ein Koppelkörper zum Einkoppeln von Ultraschallschwingungen anschließt.

Derartige Sonotroden sind grundsätzlich bekannt und dienen zur Ultraschallbearbeitung, beispielsweise zum Schweißen und/oder Trennen von Folienmaterial. Eine aus der US 2021/0370613 A1 bekannte Bauform weist einen scheibenförmigen Sonotrodenkörper auf, wobei als Koppelkörper ein oder zwei stabförmige Abschnitte dienen, die im Zentrum des Sonotrodenkörpers an diesen angebunden sind. Das Einkoppeln der Ultraschallschwingungen erfolgt durch eine Anbindung der Ultraschallquelle (Konverter) über zumindest einen stabförmigen Abschnitt im Bereich der Rotationsachse und zwar entweder direkt oder auch indirekt über zusätzliche Schwingungsteile in Form von rotationssymmetrischen Stäben oder Transformationsstücken. Diese Schwingungsteile können dann auch zur Einbindung in eine Maschinenhalterung dienen.

Da bei Rotationssonotroden die Ultraschallschwingungen axial eingekoppelt werden, jedoch auf ein Werkstück in radialer Richtung einwirken sollen, muss deren Schwingungsrichtung aus einer longitudinalen Richtung (Axialrichtung) in eine transversale Richtung (Radialrichtung) umgewandelt werden. Hierzu erfolgt bei bekannten Sonotroden die Anbindung zwischen dem Koppelkörper und dem eigentlichen Sonotrodenkörper im Bereich von Schwingungsknoten und nicht im Bereich der Schwingungsmaxima an der Arbeitsfläche.

Es ist die Aufgabe der vorliegenden Erfindung, eine Rotationssonotrode der vorstehend beschriebenen Art zu schaffen, mit der bei geringem Materialverbrauch mit vergleichsweise großen Arbeitsflächen ein guter Wirkungsgrad erzielbar ist.

Die Lösung dieser Aufgabe erfolgt durch die Merkmale des Anspruchs 1 und insbesondere dadurch, dass der Koppelkörper der Rotationssonotrode neben der Arbeitsfläche an den Sonotrodenkörper angebunden ist.

Eine solche Bauweise stellt eine Abkehr von herkömmlichen Rotationssonotroden dar, bei denen der Koppelkörper üblicherweise im Bereich der Rotationsachse an den Sonotrodenkörper angebunden ist. Durch das Einbringen der Ultraschallschwingungen unmittelbar neben der bzw. benachbart zu der Arbeitsfläche des Sonotrodenkörpers kann dieser sehr effektiv quer zu einer Längserstreckung der Arbeitsfläche, d.h. quer zur Rotationsachse, schwingen, obwohl die Ultraschallschwingungen von einem Konverter zunächst in Axialrichtung in die Sonotrode eingekoppelt werden.

Die vorbeschriebene Bauweise kann auch bei nicht rotierenden Sonotroden Anwendung finden, was jedoch nicht beansprucht ist.

Vorteilhafte Ausführungsformen der Erfindung sind in der Beschreibung, der Zeichnung sowie den Unteransprüchen beschrieben.

Nach einer vorteilhaften Ausführungsform kann sich die Arbeitsfläche des Sonotrodenkörpers parallel zur Rotationsachse in Form eines Streifens erstrecken, wobei an ein Ende des Streifens ein Koppelkörper an den Sonotrodenkörper angebunden ist. Bei dieser Ausführungsform wird hierdurch die eingekoppelte Ultraschallschwingung unmittelbar neben der Arbeitsfläche, d.h. am äußeren Umfang des Sonotrodenkörpers in diesen eingekoppelt, wodurch der Sonotrodenkörper dann transversal schwingt und im Bereich der Arbeitsfläche eine maximale Amplitude vorhanden ist.

Nach einer weiteren vorteilhaften Ausführungsform kann der Koppelkörper einen sich entlang der Rotationsachse und zumindest einen sich quer, jedoch nicht notwendigerweise rechtwinklig, zur Rotationsachse erstreckenden Teil aufweisen, wobei der sich quer zur Rotationsachse erstreckende Teil neben bzw. benachbart zu der Arbeitsfläche an den Sonotrodenkörper angebunden bzw. angekoppelt ist. Der sich quer zur Rotationsachse erstreckende Teil des Koppelkörpers schließt mit der Rotationsachse einen spitzen Winkel ein, der größer als 0° und üblicherweise kleiner als 90° ist. Insbesondere kann dieser Winkel zwischen 50° und 90° oder auch zwischen 60° und 80° betragen.

Nach einer weiteren vorteilhaften Ausführungsform kann die Länge des sich entlang der Rotationsachse erstreckende Teils und die Länge des sich quer zur Rotationsachse erstreckenden Teils jeweils λ/4, oder ein ganzzahliges Vielfaches von λ/4, betragen, bezogen auf die Eigenfrequenz des Koppelkörpers. Hierdurch bildet der Koppelkörper ein Schwinggebilde mit einer effektiven Länge von beispielsweise λ/2, das jedoch in zwei Abschnitte aufgeteilt ist, von denen sich einer entlang der Rotationsachse und einer unter einem Winkel dazu erstreckt.

Gute Ergebnisse haben sich bei Ausführungsformen gezeigt, bei denen der sich entlang der Rotationsachse erstreckende Teil des Koppelkörpers einen kreisförmigen Querschnitt aufweist und der sich quer zur Rotationsachse erstreckende Teil einen viereckigen Querschnitt aufweist.

Nach einer weiteren vorteilhaften Ausführungsform kann der Koppelkörper ausschließlich außerhalb der Rotationsachse an den Sonotrodenkörper angebunden sein. Es besteht dann im Bereich der Rotationsachse keine unmittelbare Verbindung zwischen dem Koppelkörper und dem Sonotrodenkörper, so dass der Sonotrodenkörper in diesem Bereich frei (längs und quer zur Axialrichtung) schwingen kann.

Nach einer weiteren vorteilhaften Ausführungsform kann der Koppelkörper mit dem Sonotrodenkörper zumindest einen zu zwei Seiten offenen Freiraum einschließen. Ein solcher Hohlraum kann sich von der Rotationsachse aus quer zu dieser erstrecken, so dass die Rotationssonotrode an dieser Stelle und außerhalb des Sonotrodenkörpers ein Fenster bzw. einen von zwei Seiten zugänglichen Durchlass bildet. Auch dies begünstigt die Einkopplung der Ultraschallschwingungen in den Sonotrodenkörper, wobei durch den Freiraum außerhalb und im Bereich der Rotationsachse des Sonotrodenkörpers ein gutes Schwingungsverhalten erzielt werden kann. Es ist vorteilhaft, wenn dieser Freiraum annähernd dreieckig oder auch trapezförmig ausgebildet ist, d.h. sich dessen Querschnitt in Richtung der Rotationsachse vergrößert.

Nach einer weiteren vorteilhaften Ausführungsform kann der Koppelkörper sich in zumindest zwei Äste bzw. Schenkel gabeln, beispielsweise Y-förmig ausgebildet sein. Hierdurch lassen sich die Ultraschallschwingungen gezielt ausschließlich an zwei voneinander beabstandeten Außenabschnitten des Sonotrodenkörpers neben jeweils einer Arbeitsfläche in diesen einkoppeln, beispielsweise wenn der Sonotrodenkörper plattenförmig ausgebildet ist. Bei anderen geometrischen Formen des Sonotrodenkörpers kann sich der Koppelkörper auch in mehr als zwei Äste gabeln, wobei diese Äste dann auf vorteilhafte Weise symmetrisch zur Rotationsachse angeordnet werden können.

Nach einer weiteren vorteilhaften Ausführungsform kann der Koppelkörper über eine Verjüngung an den Sonotrodenkörper angekoppelt sein. Eine solche Verjüngung kann eine Gelenkstelle zwischen Sonotrodenkörper und Koppelkörper bilden, damit ein gutes Schwingungsverhalten des Sonotrodenkörpers im Betrieb erzielt werden kann.

Nach einer weiteren vorteilhaften Ausführungsform kann der Koppelkörper die Ultraschallschwingungen in den Sonotrodenkörper in einer Richtung einkoppeln, die parallel zu einer Längserstreckung der Arbeitsfläche verläuft, wodurch die Arbeitsfläche im Betrieb quer zur Rotationsachse in Schwingung versetzt wird.

Nach einer weiteren vorteilhaften Ausführungsform kann der Sonotrodenkörper quaderförmig sein und insbesondere die Form einer rechteckigen Platte aufweisen. Bei dieser Ausführungsform können jeweils zwei gegenüberliegende Stirnseiten der rechteckigen Platte als Arbeitsfläche dienen, wobei diese Stirnseiten leicht bombiert bzw. bezogen auf die Rotationsachse mit einem Radius versehen sein können. Die rechteckige Platte stellt somit einen Sonotrodenkörper mit zwei Flügeln dar, wobei jedoch auch andere Ausführungsformen mit drei oder mehr Flügeln möglich sind.

Nach einer weiteren vorteilhaften Ausführungsform kann der Sonotrodenkörper mit zumindest einer Erhebung versehen sein, die dessen Querschnitt abschnittsweise vergrößern. Durch derartige Erhebungen, die selbst wiederum auch mit Vertiefungen versehen sein können, kann der Sonotrodenkörper so gestaltet werden, dass eine optimale Anpassung an Frequenz und eine Optimierung der Amplitude erfolgt.

Nach einer weiteren vorteilhaften Ausführungsform kann mit dem Koppelkörper ein Lagerring verbunden sein, wobei die Verbindung insbesondere einstückig ausgebildet sein kann.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine perspektivische Ansicht einer Rotationssonotrode; und
- Fig. 2: eine perspektivische Ansicht eines Koppelkörpers.

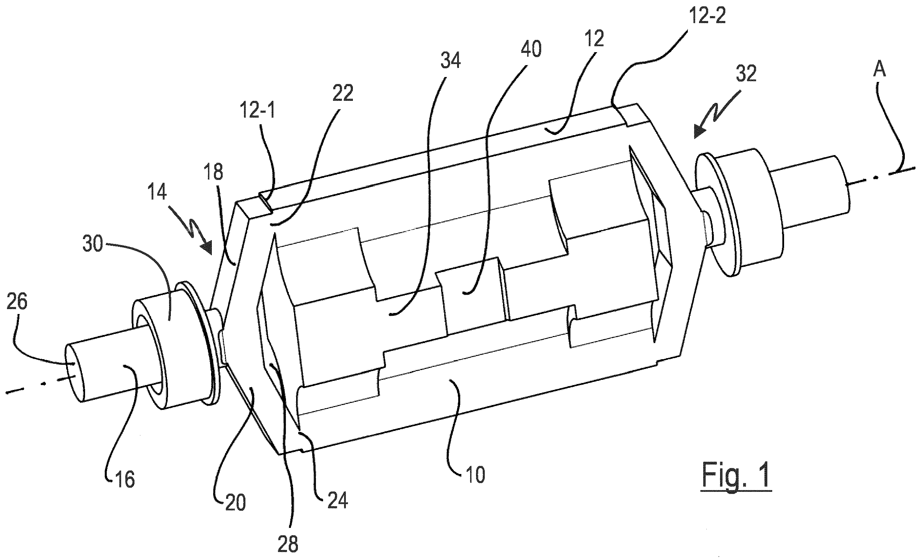

Fig. 1 zeigt eine perspektivische Ansicht einer Rotationssonotrode, die einen um eine Rotationsachse A drehbaren Sonotrodenkörper 10 aufweist, der bei dem dargestellten Ausführungsbeispiel die grundsätzliche Form einer rechteckigen Platte besitzt, die um die Rotationsachse A drehbar ist, welche parallel zu den beiden Längsseiten des Sonotrodenkörpers 10 verläuft. Die jeweiligen Stirnflächen dieser beiden Längsseiten sind als Arbeitsfläche 12 ausgebildet, wobei in Fig. 1 nur eine der beiden Arbeitsflächen 12 sichtbar ist. Entsprechend besitzen die beiden Arbeitsflächen 12 die Form eines länglichen Streifens mit einem ersten Ende 12-1 und einem gegenüberliegenden zweiten Ende 12-2. Die beiden Arbeitsflächen 12 können in einer Schnittebene quer zur Rotationsachse A gesehen mit einem Radius versehen sein bzw. bombiert ausgebildet sein.

Zum Einkoppeln von Ultraschallschwingungen mit Hilfe eines (nicht dargestellten) Konverters schließt sich an den Sonotrodenkörper 10 ein Koppelkörper 14 an, der bei dem dargestellten Ausführungsbeispiel einstückig mit dem Sonotrodenkörper 10 verbunden ist.

Der Koppelkörper 14 ist bei dem dargestellten Ausführungsbeispiel etwa Y-förmig ausgebildet und weist einen ersten im Querschnitt kreisförmigen Schenkel 16 auf, der sich in zwei Äste bzw. weitere Schenkel 18 und 20 gabelt. Die beiden weiteren Schenkel 18 und 20 besitzen einen viereckigen Querschnitt und sind bei dem dargestellten Ausführungsbeispiel einstückig mit dem ersten Schenkel 16 ausgebildet.

Wie insbesondere Fig. 1 verdeutlicht, sind die beiden weiteren Schenkel 18 und 20 an ihren äußeren Enden über jeweils eine Verjüngung 22 und 24 an die Stirnseite des Sonotrodenkörpers 10 angekoppelt, wobei die Anbindung des Koppelkörpers 14 über seine beiden weiteren Schenkel 18 und 20 unmittelbar neben einer Arbeitsfläche 12 des Sonotrodenkörpers 10 erfolgt.

Wenn der Koppelkörper 14 im Bereich seiner vorderen Stirnfläche 26 (auf an sich bekannte Art und Weise einstückig, stoffschlüssig, kraftschlüssig oder auf andere Weise) an einen Konverter (mit oder ohne zwischenliegenden Transformationsstücken) angekoppelt wird, werden die von dem Konverter erzeugten Ultraschallschwingungen zunächst in Axialrichtung in den Koppelkörper 14 angekoppelt. Beim Übergang des ersten Schenkels 16 in die zwei weiteren Schenkel 18 und 20 erfolgt dann jedoch eine Umlenkung quer zur Axialrichtung A, so dass sich die Ultraschallwellen in den beiden weiteren Schenkeln 18 und 20 zumindest annähernd bzw. überwiegend in transversaler Richtung, d.h. quer zur Rotationsachse A ausbreiten. Im Ergebnis koppelt der Koppelkörper 14 die Ultraschallschwingungen in den Sonotrodenkörper 10 direkt neben der Arbeitsfläche 12 in einer Richtung ein, die parallel zur Längserstreckung der Arbeitsfläche 12 verläuft.

Wie Fig. 1 weiterhin verdeutlicht, schließt der Koppelkörper 14 mit dem Sonotrodenkörper 10 einen offenen Freiraum 28 ein, der zu beiden Seiten hin offen ist. Der Freiraum 28 besitzt bei dem dargestellten Ausführungsbeispiel eine annähernd dreieckige bzw. trapezförmige Form, d.h. der Querschnitt des Freiraums nimmt in Richtung der Mittelachse A radial von außen kommend zu.

Um eine optimierte Frequenz- und Amplitudenanpassung zu erzielen, ist der Sonotrodenkörper 10 bei dem dargestellten Ausführungsbeispiel auf beiden Seiten mit einer buckelartigen Erhebung 34 versehen, wobei die wiederum mit einer beispielsweise mittigen Vertiefung 40 versehen ist. Ebenso kann der Koppelkörper 14 zur Optimierung abschnittsweise Verdickungen aufweisen, die an den sich quer zur Rotationsachse A erstreckenden weiteren Schenkeln 18 und 20 ausgebildet sein können.

Es sei darauf hingewiesen, dass die geometrische Form einer rechteckigen Platte für den Sonotrodenkörper lediglich ein bevorzugtes Ausführungsbeispiel ist. In gleicher Weise könnte der vorstehend beschriebene Koppelkörper 14 auch an einen Sonotrodenkörper angebunden sein, der kreisscheibenförmig ausgebildet ist, wobei dann der Koppelkörper 14 im Bereich des Außenumfangs an den Scheibenkörper angebunden wäre. Ebenso ist es nicht erforderlich, dass der sich in Axialrichtung erstreckende Teil des Koppelkörpers 14 rotationssymmetrisch ausgebildet ist.

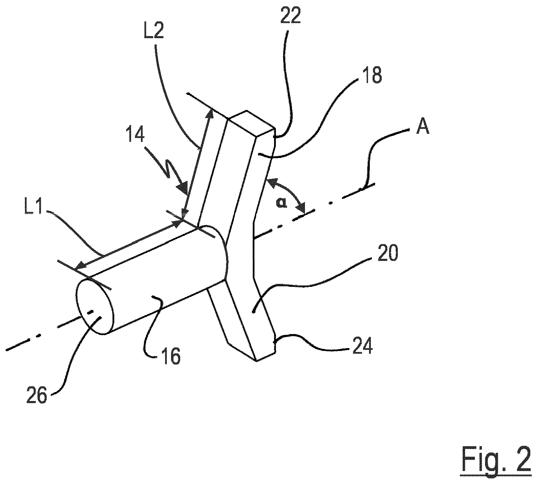

Fig. 2 zeigt eine perspektivische Ansicht einer weiteren Ausführungsform eines Koppelkörpers, wobei jedoch für gleiche Komponenten gleiche Bezugszeichen gewählt sind.

Der in Fig. 2 dargestellte Koppelkörper 14 ist grundsätzlich gleichartig aufgebaut wie der Koppelkörper 14 des Ausführungsbeispiels von Fig. 1. Wie zu erkennen ist, schließen auch bei diesem Ausführungsbeispiel die sich quer zur Rotationsachse erstreckenden weiteren Schenkel 18 und 20 des Koppelkörpers 14 einen spitzen Winkel α mit der Rotationsachse A ein, der auch bei diesem dargestellten Ausführungsbeispiel etwa 70° beträgt. Die Länge L1 des sich entlang der Rotationsachse A erstreckenden ersten Schenkels 16 des Koppelkörpers 14 kann auf vorteilhafte Weise genauso groß sein wie die Länge L2 der beiden sich quer zur Rotationsachse A erstreckenden weiteren Schenkel 18 und 20, wobei die beiden Längen L1 und L2 beispielsweise λ/4 betragen können. Hierdurch ist als Koppelkörper 14 ein λ/2-Schwingungsgebilde geschaffen, bei dem ein λ/4-Teil longitudinal bzw. axial und parallel zur Rotationsachse A schwingt und in Bezug auf diese Achse A die beiden sich verzweigenden Äste, d.h. die beiden weiteren Schenkel 18 und 20, eine Schwingungsrichtung mit einem hohen transversalen Anteil besitzen. Der Schwingungsknoten kann dabei so gewählt werden, dass dieser vor der Aufteilung in die beiden weiteren Schenkel 18 und 20 liegt, so dass dieser Bereich auf vorteilhafte Weise für eine Lagerung oder Abstützung herangezogen werden kann.

Entsprechend ist bei dem Ausführungsbeispiel von Fig. 1 in diesem Bereich ein Lagerring 30 vorgesehen, der bei dem dargestellten Ausführungsbeispiel beispielsweise einstückig mit dem ersten Schenkel 16 des Koppelkörpers 14 verbunden ist.

Wie vorstehend beschrieben wurde, ist bei dem Ausführungsbeispiel von Fig. 1 an der linken Schmalseite des Sonotrodenkörpers 10 der Koppelkörper 14 angebunden, beispielsweise durch einstückige Herstellung von Koppelkörper 14 und Sonotrodenkörper 10. Auf der gegenüberliegenden Schmalseite des Sonotrodenkörpers 10 ist eine Komponente 32 an dem Sonotrodenkörper 10 beispielsweise ebenfalls einstückig angebunden, die identisch zu dem Koppelkörper 14 ausgebildet ist. Diese Komponente kann auch zur Einkopplung von Ultraschallschwingungen dienen, kann jedoch auch lediglich eine Lagerfunktion aufweisen.

## Patentansprüche

1. Rotationssonotrode mit einem um eine Rotationsachse (A) drehbaren Sonotrodenkörper (10), der zumindest eine Arbeitsfläche (12) aufweist, wobei sich an den Sonotrodenkörper (10) zumindest ein Koppelkörper (14) zum Einkoppeln von Ultraschallschwingungen anschließt, wobei der Koppelkörper (14) neben der Arbeitsfläche (12) an den Sonotrodenkörper (10) angebunden ist,
**dadurch gekennzeichnet,**
**dass** im Bereich der Rotationsachse (A) keine Verbindung zwischen dem Koppelkörper (14) und dem Sonotrodenkörper (10) vorhanden ist.

2. Rotationssonotrode Vorrichtung nach Anspruch 1,
**dadurch gekennzeichnet,**
**dass** sich die Arbeitsfläche (12) parallel zur Rotationsachse (A) in Form eines Streifens erstreckt und an zumindest einem Ende (12-1) des Streifens ein Koppelkörper (14) an den Sonotrodenkörper (10) angebunden ist.

3. Rotationssonotrode nach Anspruch 1 oder 2,
**dadurch gekennzeichnet,**
**dass** der Koppelkörper (14) einen sich entlang der Rotationsachse (A) erstreckenden Teil (16) und zumindest einen sich quer zur Rotationsachse (A) erstreckenden Teil (18, 20) aufweist, wobei der sich quer zur Rotationsachse erstreckende Teil (18, 20) neben der Arbeitsfläche (12) an den Sonotrodenkörper (10) angebunden ist.

4. Rotationssonotrode nach Anspruch 3,
**dadurch gekennzeichnet,**
**dass** der sich quer zur Rotationsachse (A) erstreckende Teil (18, 20) mit dieser einen Winkel (α) zwischen 50° und 90°, insbesondere zwischen 60° und 80° einschließt.

5. Rotationssonotrode nach Anspruch 3 oder 4,
**dadurch gekennzeichnet,**
**dass** der sich entlang der Rotationsachse (A) erstreckende Teil (16) einen kreisförmigen Querschnitt aufweist und der sich quer zur Rotationsachse (A) erstreckende Teil einen viereckigen Querschnitt aufweist.

6. Rotationssonotrode nach einem der vorstehenden Ansprüche 3 - 5,
**dadurch gekennzeichnet,**
**dass** die Länge (L1) des sich entlang der Rotationsachse (A) erstreckende Teils (16) und die Länge (L2) des sich quer zur Rotationsachse (A) erstreckenden Teils (18, 20) jeweils λ/4, oder ein ganzzahliges Vielfaches von λ/4, bezogen auf die Eigenfrequenz des Koppelkörpers (14) beträgt.

7. Rotationssonotrode nach einem der vorstehenden Ansprüche,
**dadurch gekennzeichnet,**
**dass** der Koppelkörper (14) mit dem Sonotrodenkörper (10) zumindest einen zu zwei Seiten offenen Freiraum (28) einschließt.

8. Rotationssonotrode nach einem der vorstehenden Ansprüche,
**dadurch gekennzeichnet,**
**dass** der Koppelkörper (14) sich in zumindest zwei Äste (18, 20) gabelt und insbesondere Y-förmig ausgebildet ist.

9. Rotationssonotrode nach einem der vorstehenden Ansprüche,
**dadurch gekennzeichnet,**
**dass** der Koppelkörper (14) über eine Verjüngung (22, 24) an den Sonotrodenkörper (10) angekoppelt ist.

10. Rotationssonotrode nach einem der vorstehenden Ansprüche,
**dadurch gekennzeichnet,**
**dass** der Koppelkörper (14) die Ultraschallschwingungen in den Sonotrodenkörper (10) in einer Richtung einkoppelt, die parallel zu einer Längserstreckung der Arbeitsfläche (12) verläuft, wodurch die Arbeitsfläche (12) im Betrieb quer zur Rotationsachse (A) in Schwingung versetzt wird.

11. Rotationssonotrode nach einem der vorstehenden Ansprüche,
**dadurch gekennzeichnet,**
**dass** der Sonotrodenkörper (10) quaderförmig ist und insbesondere die Form einer rechteckigen Platte aufweist.

12. Rotationssonotrode nach einem der vorstehenden Ansprüche,
**dadurch gekennzeichnet,**
**dass** der Sonotrodenkörper (10) mit zumindest einer Erhebung (34) versehen ist, die dessen Querschnitt abschnittsweise vergrößert.

13. Rotationssonotrode nach einem der vorstehenden Ansprüche,
**dadurch gekennzeichnet,**
**dass** ein Lagerring (30) insbesondere einstückig mit dem Koppelkörper (14) verbunden ist.

## Claims

1. Rotary sonotrode having a sonotrode body (10) which is rotatable about an axis of rotation (A) and which has at least one working surface (12), the sonotrode body (10) being adjoined by at least one coupling body (14) for coupling in ultrasonic vibrations, the coupling body (14) being connected to the sonotrode body (10) next to the working surface (12),
**characterized**
**in that** there is no connection between the coupling body (14) and the sonotrode body (10) in the region of the axis of rotation (A).

2. Rotary sonotrode device according to Claim 1,
**characterized**
**in that** the working surface (12) extends parallel to the axis of rotation (A) in the form of a strip, and a coupling body (14) is connected to the sonotrode body (10) at at least one end (12-1) of the strip.

3. Rotary sonotrode according to Claim 1 or 2,
**characterized**
**in that** the coupling body (14) has a part (16) extending along the axis of rotation (A) and at least one part (18, 20) extending transversely with respect to the axis of rotation (A), the part (18, 20) extending transversely with respect to the axis of rotation being connected to the sonotrode body (10) next to the working surface (12).

4. Rotary sonotrode according to Claim 3,
**characterized**
**in that** the part (18, 20) extending transversely with respect to the axis of rotation (A) encloses an angle (α) of between 50° and 90°, in particular of between 60° and 80°, with said axis of rotation.

5. Rotary sonotrode according to Claim 3 or 4,
**characterized**
**in that** the part (16) extending along the axis of rotation (A) has a circular cross section and the part extending transversely with respect to the axis of rotation (A) has a square cross section.

6. Rotary sonotrode according to one of the preceding Claims 3-5,
**characterized**
**in that** the length (L1) of the part (16) extending along the axis of rotation (A) and the length (L2) of the part (18, 20) extending transversely with respect to the axis of rotation (A) are in each case λ/4, or an integral multiple of λ/4, in relation to the natural frequency of the coupling body (14).

7. Rotary sonotrode according to one of the preceding claims,
**characterized**
**in that** the coupling body (14) encloses with the sonotrode body (10) at least one free space (28) which is open on two sides.

8. Rotary sonotrode according to one of the preceding claims,
**characterized**
**in that** the coupling body (14) branches into at least two branches (18, 20) and is in particular of Y-shaped design.

9. Rotary sonotrode according to one of the preceding claims,
**characterized**
**in that** the coupling body (14) is coupled to the sonotrode body (10) via a tapering (22, 24).

10. Rotary sonotrode according to one of the preceding claims,
**characterized**
**in that** the coupling body (14) couples the ultrasonic vibrations into the sonotrode body (10) in a direction which runs parallel to a longitudinal extent of the working surface (12), as a result of which the working surface (12) is made to vibrate transversely to the axis of rotation (A) during operation.

11. Rotary sonotrode according to one of the preceding claims,
**characterized**
**in that** the sonotrode body (10) is cuboidal and in particular has the shape of a rectangular plate.

12. Rotary sonotrode according to one of the preceding claims,
**characterized**
**in that** the sonotrode body (10) is provided with at least one elevation (34) which increases the cross section thereof in sections.

13. Rotary sonotrode according to one of the preceding claims,
**characterized**
**in that** a bearing ring (30) is connected in particular in one piece to the coupling body (14).

## Revendications

1. Sonotrode rotative comprenant un corps de sonotrode (10) pouvant tourner autour d'un axe de rotation (A), qui présente au moins une surface de travail (12), au moins un corps de couplage (14) pour le couplage d'oscillations ultrasonores se raccordant au corps de sonotrode (10), le corps de couplage (14) étant relié au corps de sonotrode (10) à côté de la surface de travail (12),
**caractérisée en ce que**
dans la région de l'axe de rotation (A), aucune liaison n'est présente entre le corps de couplage (14) et le corps de sonotrode (10).

2. Sonotrode rotative selon la revendication 1,
**caractérisée en ce que**
la surface de travail (12) s'étend parallèlement à l'axe de rotation (A) sous la forme d'une bande et un corps de couplage (14) est relié au corps de sonotrode (10) au niveau d'au moins une extrémité (12-1) de la bande.

3. Sonotrode rotative selon la revendication 1 ou 2,
**caractérisée en ce que**
le corps de couplage (14) présente une partie (16) s'étendant le long de l'axe de rotation (A) et au moins une partie (18, 20) s'étendant transversalement à l'axe de rotation (A), la partie (18, 20) s'étendant transversalement à l'axe de rotation étant reliée au corps de sonotrode (10) à côté de la surface de travail (12).

4. Sonotrode rotative selon la revendication 3,
**caractérisée en ce que**
la partie (18, 20) s'étendant transversalement à l'axe de rotation (A) forme avec celle-ci un angle (α) compris entre 50° et 90°, en particulier entre 60° et 80°.

5. Sonotrode rotative selon la revendication 3 ou 4,
**caractérisée en ce que**
la partie (16) s'étendant le long de l'axe de rotation (A) présente une section transversale circulaire et la partie s'étendant transversalement à l'axe de rotation (A) présente une section transversale quadrangulaire.

6. Sonotrode rotative selon l'une quelconque des revendications précédentes 3 à 5,
**caractérisée en ce que**
la longueur (L1) de la partie (16) s'étendant le long de l'axe de rotation (A) et la longueur (L2) de la partie (18, 20) s'étendant transversalement à l'axe de rotation (A) valent à chaque fois λ/4, ou un multiple entier de λ/4, par rapport à la fréquence propre du corps de couplage (14).

7. Sonotrode rotative selon l'une quelconque des revendications précédentes,
**caractérisée en ce que**
le corps de couplage (14) forme avec le corps de sonotrode (10) au moins un espace libre (28) ouvert sur deux côtés.

8. Sonotrode rotative selon l'une quelconque des revendications précédentes,
**caractérisée en ce que**
le corps de couplage (14) se divise en au moins deux branches (18, 20) et est réalisé en particulier en forme de Y.

9. Sonotrode rotative selon l'une quelconque des revendications précédentes,
**caractérisée en ce que**
le corps de couplage (14) est couplé au corps de sonotrode (10) par le biais d'un rétrécissement (22, 24).

10. Sonotrode rotative selon l'une quelconque des revendications précédentes,
**caractérisée en ce que**
le corps de couplage (14) couple les oscillations ultrasonores dans le corps de sonotrode (10) dans une direction qui s'étend parallèlement à une étendue longitudinale de la surface de travail (12), moyennant quoi la surface de travail (12) est mise en oscillation transversalement à l'axe de rotation (A) pendant le fonctionnement.

11. Sonotrode rotative selon l'une quelconque des revendications précédentes,
**caractérisée en ce que**
le corps de sonotrode (10) est parallélépipédique et présente en particulier la forme d'une plaque rectangulaire.

12. Sonotrode rotative selon l'une quelconque des revendications précédentes,
**caractérisée en ce que**
le corps de sonotrode (10) est pourvu d'au moins une élévation (34) qui agrandit sa section transversale par sections.

13. Sonotrode rotative selon l'une quelconque des revendications précédentes,
**caractérisée en ce que**
une bague de palier (30) est connectée en particulier d'une seule pièce au corps de couplage (14).
